# EUROPÄISCHE PATENTSCHRIFT

(11) **EP 2 677 156 B1**
(45) Veröffentlichungstag und Bekanntmachung des Hinweises auf die Patenterteilung: **07.12.2016**
(21) Anmeldenummer: 13003072.9
(22) Anmeldetag: 15.06.2013
(51) Int. Cl.: F02M 35/116, F02M 35/10, F02M 21/04, F02M 35/104, F02M 35/112, F02M 21/02

(54) **Ansauganlage für Brennkraftmaschinen**
Intake assembly for combustion engines
Installation d'aspiration pour moteurs à combustion interne

(30) Priorität: 19.06.2012 DE 102012012039
(43) Veröffentlichungstag der Anmeldung: 25.12.2013
(73) Patentinhaber: MAN Truck & Bus AG, 80995 München (DE)
(72) Erfinder: Boegershausen, Mathias, 91056 Erlangen (DE); Barciela, Bruno, 90489 Nürnberg (DE)

(56) Entgegenhaltungen:
- WO-A1-90/15923
- DE-A1- 19 855 805
- FR-A1- 2 941 272

## Beschreibung

Die vorliegende Erfindung betrifft eine Ansauganlage für Brennkraftmaschinen mit mehreren Zylindern, insbesondere für Saug-Gasmotoren, ggf. auch für aufgeladene Gasmotoren, gemäß dem Oberbegriff des Patentanspruchs 1.

Bei Brennkraftmaschinen mit externer Gemischbildung, insbesondere bei Gasmotoren, mit in die Ansauganlage integrierten Gasmischern ist zur Erzielung eines guten Wirkungsgrades der Brennkraftmaschine eine gleichmäßig verteilte, homogene Luft-Brennstoff-Zuführung wichtig, die bekanntermaßen auch durch die geometrische Gestaltung der Saugleitungen beeinflussbar ist (vergleiche zum Beispiel DE 198 55 805 A1).

Es sind ferner Ansauganlagen bekannt, bei denen ausgehend von einem zentralen Sammelrohr bogenförmig abzweigende Einzelrohre zu den Zylindern der Brennkraftmaschine vorgesehen sind (zum Beispiel DE 10 2005 036 104 A1). Neben der baulich kompakten Form solcher Ansauganlagen können relativ lange Einzelrohre insbesondere zur Erzielung von Resonanzaufladungen verwirklicht werden. Eine externe Kraftstoffzufuhr liegt hier zumeist nicht vor.

WO 90/15923 beschreibt eine Ansauganlage für einen Gasmotor gemäss dem Oberbegriff des Anspruchs 1.

Aufgabe der Erfindung ist es, eine Ansauganlage mit stromauf zumindest eines Ansaugverteilers liegender Saugleitung derart auszubilden, dass bei externer Kraftstoffzuführung bzw. einem integrierten Gasmischer mit baulich einfachen Mitteln eine besonders homogene Verteilung Kraftstoff (Gas): Luft in Verbindung mit einem geringen Druckabfall erzielbar ist.

Die Lösung dieser Aufgabe gelingt mit den Merkmalen des Patentanspruchs 1. Vorteilhafte und besonders zweckmäßige Weiterbildungen der Erfindung sind Gegenstand der Unteransprüche.

Erfindungsgemäß wird vorgeschlagen, dass die Saugleitung mit wenigstens einem gekrümmten Abschnitt versehen ist, vorzugsweise mit mehreren gekrümmten Abschnitten versehen ist, der oder von denen zumindest einer einen Bogen von mehr als 180 Grad, insbesondere von ca. 270 Grad, aufweist, wobei die Querschnittsform innerhalb des Bogens oval oder elliptisch ausgebildet ist. Durch die Krümmung wird ein insgesamt kompakter Aufbau der Ansauganlage möglich, wobei durch die Ovalität des stark gekrümmten Bogenabschnitts der Saugleitung ein relativ geringer Unterschied zwischen dem, im Längsquerschnitt durch die Saugleitung betrachtet, Außenwand- und Innenwandradius der Saugleitung erzielt wird, was dazu führt, dass auch die Strömungsunterschiede zwischen Rohraußenseite und Rohrinnenseite relativ gering sind und dementsprechend der Strömungsgeschwindigkeitsgradient klein ist. Dadurch kommt es trotz einer starken Krümmung der Saugleitung im Bereich des Bogens zu einem lediglich geringen Druckverlust im Vergleich zu einem einen in etwa kreiszylindrischen Querschnitt aufweisenden Rundrohr bzw. Rundprofil. Gleichzeitig führt dies auch zu einer guten Durchmischung der Gase.

In besonders bevorzugter Weiterbildung der Erfindung kann dem Bogen ein im Wesentlichen S-förmiger Krümmungsabschnitt vorgeschaltet sein, der aufgrund der Mehrfachumlenkung des Ladungsstroms eine noch weiter verbesserte Homogenisierung des Gemisches ermöglicht. Besonders bevorzugt ist weiter vorgesehen, dass auch die Querschnittsform innerhalb des S-förmigen Krümmungsabschnittes oval oder elliptisch ausgebildet ist, wodurch sich auch in diesem Bereich der Saugleitung die zuvor genannten Vorteile ergeben.

Besonders vorteilhaft ist weiter eine Ausgestaltung, bei der sich der Grad der Ovalität (Ovalität ist hier definiert als Abweichung von der Kreisform bzw. Unrundheit) in der Saugleitung ändert, insbesondere über die Länge der Saugleitung gesehen in definierten Bereichen unterschiedlich ist und/oder dem jeweiligen Krümmungsradius angepasst ist und/oder in Strömungsrichtung zunimmt, insbesondere vom S-förmigen Krümmungsabschnitt ausgehend bis zu einem definierten Bereich des Bogens zunimmt. Damit wird eine den jeweiligen Saugleitungsabschnitten besonders exakt angepasste Strömungsführung mit geringem Druckverlust und guter Durchmischung erzielt.

Die Querschnittfläche der Saugleitung selbst kann im Wesentlichen über die Leitungslänge konstant sein bzw. gleich ausgeführt sein, was dazu beiträgt die erfindungsgemäßen Vorteile zu erzielen, insbesondere zu einem geringen Druckverlust führt. Beispielsweise beträgt die maximale Querschnittsflächenveränderung 15 %, vorzugsweise maximal 10 %, besonders bevorzugt maximal 5 %. Damit wird eine laminare Strömung zumindest innerhalb der S-Führung und gleichzeitig eine zumindest anteilige Homogenisierung/Vermischung erreicht.

Wie erfinderseitige Untersuchungen gezeigt haben, ist für die Erzielung der zuvor genannten Vorteile in Verbindung mit einer besonders kompakten Bauweise eine Ausgestaltung des S-förmigen Krümmungsabschnittes vorteilhaft, bei der der S-förmige Krümmungsabschnitt zwei jeweils 30 bis 60 Grad, bevorzugt ca. 45 Grad, umfassende Krümmungen aufweisen.

Die Saugleitung kann baulich vorteilhaft innerhalb des nach oben offenen V-Raums einer Brennkraftmaschine mit V-förmigen Zylinderreihen angeordnet sein, wobei sich die Saugleitung von der Einströmseite über ca. die Länge der Brennkraftmaschine erstreckt, über den Bogen zur Brennkraftmaschinenmitte zurückgeführt ist und dort in zwei seitliche Ansaugverteiler einmündet. Damit kann eine relativ lange, die Homogenisierung der Ladung bewirkende Saugleitung geschaffen werden, die zudem eine gleichmäßige Verteilung der Ladung auf die beiden Zylinderbänke ermöglicht.

Konstruktiv und baulich vorteilhaft kann dabei der S-förmige Krümmungsabschnitt der Saugleitung unterhalb der im Querschnitt V-förmig ausgeführten Einmündung des Bogens in die seitlichen Ansaugverteiler verlaufen.

Alternativ kann bei einer Reihenbrennkraftmaschine die Saugleitung von der Einströmseite im Wesentlichen seitlich über die gesamte Länge der Brennkraftmaschine und über den Bogen zu einem an der gegenüberliegenden Stirnseite der Brennkraftmaschine einen Anschluss aufweisenden Ansaugverteiler geführt sein. Die seitlich der Brennkraftmaschine angeordnete Saugleitung kann so ebenfalls eine relativ große Länge aufweisen und dementsprechend die Gemischverteilung positiv beeinflussen.

Schließlich kann an der Einströmseite der Saugleitung ein Gasmischer einer Gaszuführeinrichtung vorgesehen sein.

Zwei Ausführungsbeispiele der Erfindung sind im Folgenden mit weiteren Einzelheiten näher erläutert. Die schematische Zeichnung zeigt in:
- Fig. 1: in raumbildlicher Darstellung eine Ansauganlage für eine Brennkraftmaschine mit zwei V-förmig angeordneten Zylinderreihen, mit einem Saugrohr mit Krümmungsabschnitten, einem angeschlossenem Ansaugverteiler und einem an der Einströmseite des Saugrohrs angeordneten Gasmischer;
- Fig. 2: die Ansauganlage nach Fig. 1 in einem durch die Saugrohrmitte verlaufenden Längsschnitt;
- Fig. 3: einen Querschnitt entlang Linie III - III der Fig. 1 durch den Bogen des Saugrohrs;
- Fig. 4: einen weiteren Querschnitt gemäß Linie IV - IV der Fig. 1 durch das Saugrohr im Bereich der Einmündungsstelle in die beiden Ansaugverteiler der Brennkraftmaschine; und
- Fig. 5: eine alternative Ansauganlage für eine Reihenbrennkraftmaschine mit einem seitlich der Brennkraftmaschine angeordnetem Saugrohr mit Krümmungsabschnitten.

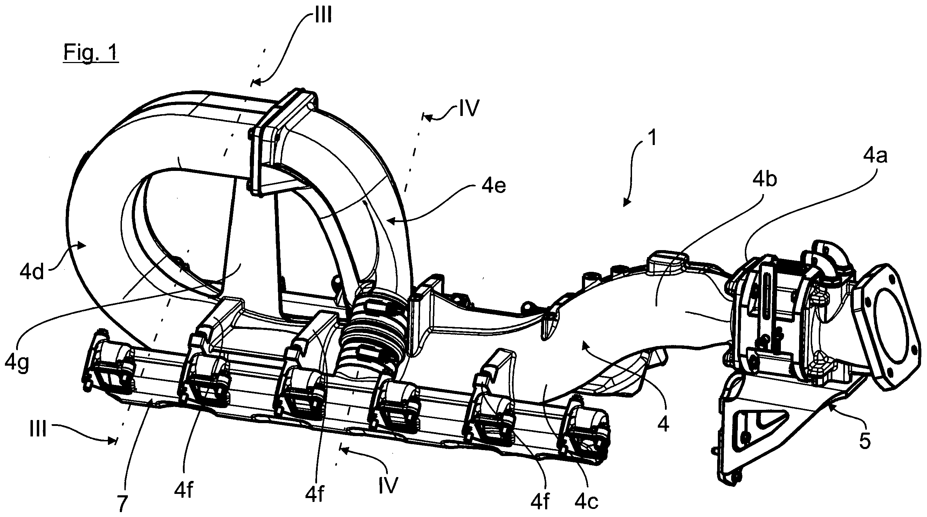

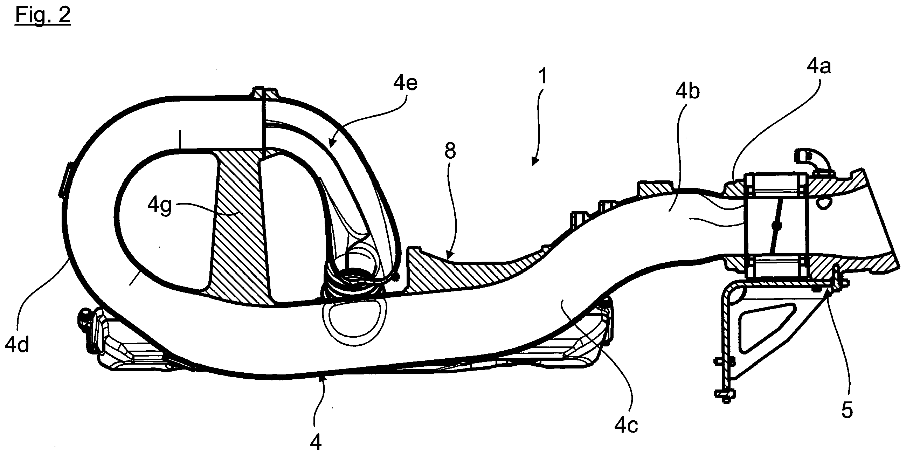

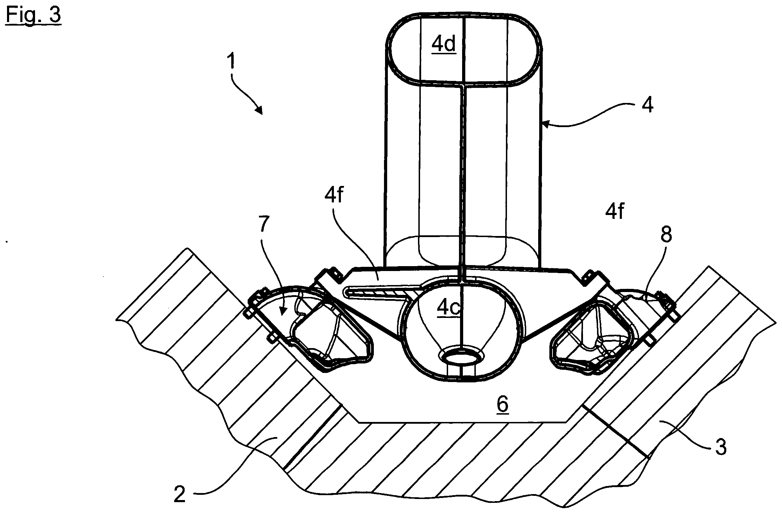

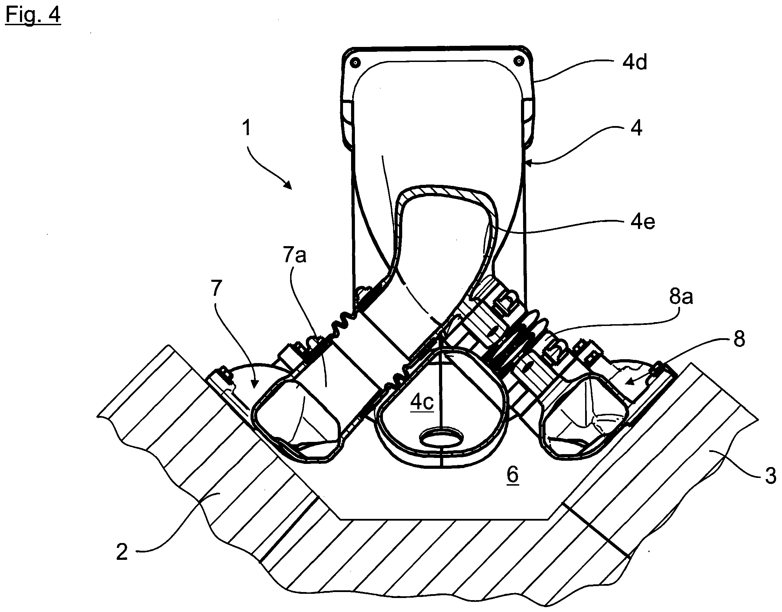

Die Fig. 1 und 2 zeigen eine Ansauganlage 1 für eine Brennkraftmaschine mit V-förmig angeordneten Zylinderreihen mit Zylinderköpfen 2, 3 (in den Fig. 3 und 4 angedeutet), die ein durchgehendes Saugrohr 4 aufweist, an dessen Einströmflansch 4a ein Gasmischer 5 (insbesondere ein Ringmischer bekannter Bauart) angeschlossen ist.

Das sich im Wesentlichen über die gesamte Länge der Brennkraftmaschine und innerhalb des durch die Zylinderreihen und Zylinderköpfe 2, 3 gebildeten V-Raums 6 erstreckende Saugrohr 4 weist einen S-förmigen Krümmungsabschnitt mit zwei etwa 45 Grad einschließenden Krümmungen 4b, 4c (vergleiche insbesondere Fig. 2) und einen über einen geraden Übergangsabschnitt daran anschließenden ca. 270 Grad umfassenden Bogen 4d auf.

Der nach oben aufragende Bogen 4d ist bis zur Brennkraftmaschinenmitte zurückgeführt und dort über eine V-förmig ausgeführte Abzweigung 4e (Fig. 4) an rohrförmige Stutzen 7a, 8a der beiden innerhalb des V-Raums 6 der Brennkraftmaschine angeordneten Ansaugverteiler 7, 8 angeschlossen. Die Ansaugverteiler 7, 8 sind in an sich bekannter Weise an die Zylinderköpfe 2, 3 der Brennkraftmaschine einlassseitig angeschlossen. Der Krümmungsabschnitt 4c des Saugrohr 4 verläuft im Bereich der Abzweigung 4e unterhalb dieser (vergleiche Fig. 4) und ist in der Querschnittsform gegebenenfalls entsprechend angepasst. Vorteilhafterweise ist die Abzweigung 4e derart angeordnet, dass das Gas bereits überwiegend (zu mindestens 90%, vorzugsweise zu mindestens 95%, besonders bevorzugt zu mindestens 99%) vermischt ist. Beispielsweise ist der Abzweig 4e erst nach wenigstens einer 160 Grad, vorzugsweise nach wenigstens einer 180 Grad umlenkenden Mischstrecke angeordnet. In der dargestellten Ausführungsform wurde der Abzweig nach einer 270 Grad Umlenkung angeordnet, so dass erst nach Homogenisierung/Vermischung des Gases eine Flutenaufteilung zu den beiden Zylinderbänken erfährt.

Im Ausführungsbeispiel ist das Saugrohr vom Gasmischer 5 bis zu einem ca. 180 Grad einschließenden Abschnitt des Bogens 4d aus Kunststoff und die daran angeschlossene Abzweigung 4e mit einem angeformten Krümmungsabschnitt von ca. 90 Grad aus Leichtmetall gefertigt.

Ferner ist das Saugrohr 4 über mehrere, angeformte Konsolen 4f (Fig. 1, 3) an den Ansaugverteilern 7, 8 befestigt und mittels einer den Bogen 4d aussteifenden Stütze 4g (Fig. 1) versehen. Die angeformten Konsolen können zur Aufnahme weiterer Motorbauteile wie beispielsweise eines Steuergerätes, oder einer Kabelführung (beides nicht dargestellt) dienen.

Im Venturiabschnitt des Gasmischers 5 wird bemessen nach den Betriebsdaten der Brennkraftmaschine das Gas, zum Beispiel Sondergase wie Biogas, Synthesegas, Erdgas oder LPG (Flüssiggas), um nur einige beispielhaft zu nennen, der Luft zugemischt und dieses Kraftstoffluftgemisch bzw. Gas-Luftgemisch über das Saugrohr 4 und die Ansaugverteiler 7, 8 zur Brennkraftmaschine geleitet.

Zur Erzielung eines möglichst homogenen Gemischs ohne größere Druckverluste weist das Saugrohr 4 über seine Länge vom Einströmflansch 4a zur Abzweigung 4e eine im Wesentlichen gleiche Querschnittsfläche auf.

Die Querschnittform des Saugrohrs 4 (Fig. 3) ist dabei in dem S-förmigen Krümmungsabschnitt 4b, 4c bis zu dem Bogen 4d bzw. entlang und damit innerhalb des Bogens 4d oval, wobei der Grad der Ovalität in Strömungsrichtung gesehen zunimmt und im Bereich des Bogens 4d größer ist als im Bereich des S-förmigen Krümmungsabschnittes 4b, 4c. Die Zunahme erfolgt bevorzugt stetig und kontinuierlich, um Kanten und Übergänge zu vermeiden. Durch die Krümmung wird ein insgesamt kompakter Aufbau der Ansauganlage möglich, wobei durch die Ovalität des stark gekrümmten Bogenabschnitts 4d der Saugleitung 4 ein relativ geringer Unterschied zwischen dem, im Längsquerschnitt durch die Saugleitung betrachtet (Fig. 2), Außenwand- und Innenwandradius der Saugleitung 4 im Bereich des Bogens 4d erzielt wird, was dazu führt, dass auch die Strömungsunterschiede zwischen Rohraußenseite und Rohrinnenseite relativ gering sind und dementsprechend der Strömungsgeschwindigkeitsgradient klein ist. Dadurch kommt es trotz einer starken Krümmung der Saugleitung im Bereich des Bogens 4d zu einem lediglich geringen Druckverlust im Vergleich zu einem einen in etwa kreiszylindrischen Querschnitt aufweisenden Rundrohr bzw. Rundprofil.

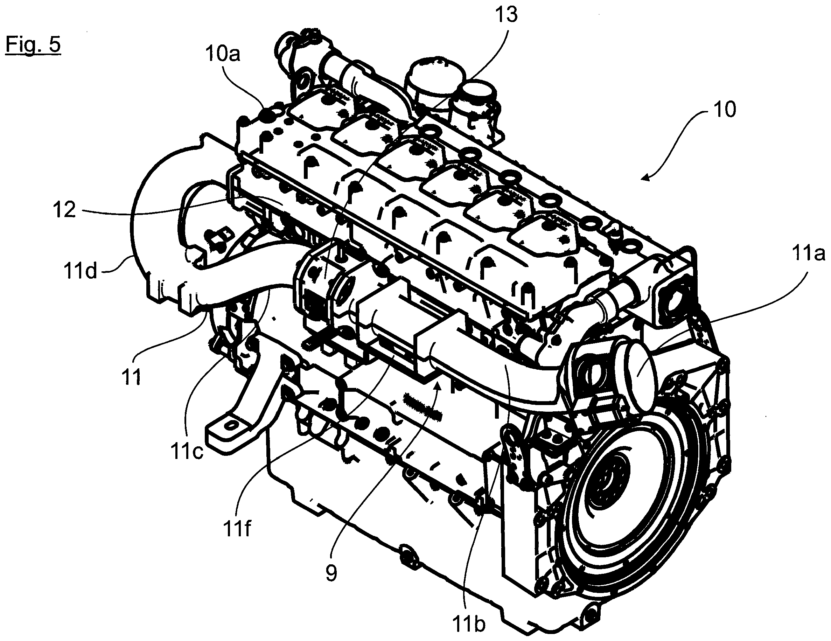

Die Fig. 5 zeigt eine alternativ ausgeführte Ansauganlage 9 für eine Reihenbrennkraftmaschine 10, die nur soweit beschrieben ist, als sie sich wesentlich von dem vorstehendem Ausführungsbeispiel unterscheidet.

Die Ansauganlage 9 weist wiederum ein Saugrohr 11 mit einem S-förmigen Krümmungsabschnitt mit Krümmungen 11b, 11c und einem etwa 270 Grad einschließendem Bogen 11d auf. Die Krümmungen 11 b, 11 c sind hier wie ersichtlich ist unterschiedlich zum Beispiel mit ca. 30 Grad (11 b) und 60 Grad (11 c) ausgeführt.

Das Saugrohr 11 erstreckt sich seitlich des Zylinderkopfes 10a der Brennkraftmaschine 10 angeordnet von einem Einströmflansch 11a aus über die gesamte Länge der Brennkraftmaschine und ist über den Bogen 11 d an der gegenüberliegenden Stirnseite der Brennkraftmaschine 10 an einen am Zylinderkopf 10a befestigten Ansaugverteiler 12 angeschlossen.

Lediglich beispielhaft ist hier eine Drosselklappe 13 zwischen den Krümmungen 11 b und 11 c des Saugrohres 11 angeordnet.

Ferner kann das Saugrohr 11 hier z.B. durchgehend aus Leichtmetall, zum Beispiel im Druckgussverfahren, hergestellt sein und mittels zumindest einer am Saugrohr 11 angegossenen Konsole 11f am benachbarten Ansaugverteiler 12 befestigt sein.

Die geometrische Auslegung und die Funktion der Ansauganlage 9 bzw. des Saugrohrs 11 ist im Wesentlichen gleich dem Saugrohr 4 nach den Fig. 1 bis 4 und deshalb nicht weiter beschrieben.

### BEZUGSZEICHENLISTE

- 1: Ansauganlage
- 2: Zylinderkopf
- 3: Zylinderkopf
- 4: Saugrohr
- 4a: Einströmflansch
- 4b: Krümmung
- 4c: Krümmung
- 4d: Bogen
- 4e: Abzweigung
- 4f: Konsolen
- 4g: Stütze
- 5: Gasmischer
- 6: V-Raum
- 7: Ansaugverteiler
- 7a: Anschlussstutzen
- 8: Ansaugverteiler
- 8a: Anschlussstutzen
- 9: Ansauganlage
- 10: Reihenbrennkraftmaschine
- 10a: Zylinderkopf
- 11: Ansauganlage
- 11a: Einströmflansch
- 11b: Krümmung
- 11c: Krümmung
- 11d: Bogen
- 11f: Konsole
- 12: Ansaugverteiler
- 13: Drosselklappe

## Patentansprüche

1. Ansauganlage für Brennkraftmaschinen mit mehreren Zylindern, insbesondere für Saug-Gasmotoren, mit zwischen zumindest einem maschinenseitigen Ansaugverteiler und einer Einrichtung zur Kraftstoffzufuhr, insbesondere einem Gasmischer, angeordneten Saugleitung, **dadurch gekennzeichnet, dass** die Saugleitung (4; 11) mit wenigstens einem gekrümmten Abschnitt (4b, 4c, 4d; 11 b, 11c, 11 d) versehen ist, der oder von denen zumindest einer einen Bogen (4d; 11 d) von mehr als 180 Grad, insbesondere von ca. 270 Grad aufweist, wobei die Querschnittsform innerhalb des Bogens (4d; 11d) oval oder elliptisch ausgebildet ist.

2. Ansauganlage nach Anspruch 1, **dadurch gekennzeichnet, dass** dem Bogen (4d; 11d) ein im Wesentlichen S-förmiger Krümmungsabschnitt (4b, 4c; 11b, 11 d) vorgeschaltet ist.

3. Ansauganlage nach einem der vorhergehenden Ansprüche, **dadurch gekennzeichnet, dass** die Querschnittsform innerhalb des S-förmigen Krümmungsabschnittes (4b, 4c; 11 b, 11 d) ebenfalls oval oder elliptisch ausgebildet ist.

4. Ansauganlage nach Anspruch 3, **dadurch gekennzeichnet, dass** der Grad der Ovalität in der Saugleitung (4; 11) unterschiedlich ist bzw. sich ändert und/oder dem jeweiligen Krümmungsradius angepasst ist und/oder in Strömungsrichtung zunimmt, insbesondere vom S-förmigen Krümmungsabschnitt (4b, 4c; 11 b, 11 d) ausgehend bis zu einem definierten Bereich des Bogens (4d; 11 d) zunimmt.

5. Ansauganlage nach einem der vorhergehenden Ansprüche, **dadurch gekennzeichnet, dass** die Querschnittfläche der Saugleitung (4; 11) im Wesentlichen gleich ausgeführt ist.

6. Ansauganlage nach einem der Ansprüche 2 bis 5, **dadurch gekennzeichnet, dass** der S-förmige Krümmungsabschnitt zwei jeweils ca. 30 bis 60 Grad, insbesondere 45 Grad, umfassende Krümmungen aufweist.

7. Ansauganlage nach einem der vorhergehenden Ansprüche, **dadurch gekennzeichnet, dass** die Saugleitung (4) innerhalb des nach oben offenen V-Raums (6) einer Brennkraftmaschine mit V-förmigen Zylinderreihen angeordnet ist, wobei sich die Saugleitung (4) von der Einströmseite (4a) im Wesentlichen über die Länge der Brennkraftmaschine erstreckt und über den Bogen (4d) zur Brennkraftmaschinenmitte zurückgeführt und dort in die zwei seitlichen Ansaugverteiler (7, 8) einmündet.

8. Ansauganlage nach Anspruch 7, **dadurch gekennzeichnet, dass** der S-förmige Krümmungsabschnitt (4b, 4c) der Saugleitung (4) unterhalb der im Querschnitt V-förmig ausgeführten Abzweigung (4e) des Bogens (4d) in die seitlichen Ansaugverteiler (7, 8) verläuft.

9. Ansauganlage nach einem der vorhergehenden Ansprüche, **dadurch gekennzeichnet, dass** bei einer Reihenbrennkraftmaschine (10) die Saugleitung (11) von der Einströmseite (11a) im Wesentlichen über die gesamte Länge der Brennkraftmaschine (10) und über den Bogen (11 d) zu einem an der gegenüberliegenden Stirnseite der Brennkraftmaschine (10) einen Anschluss aufweisenden Ansaugverteiler (12) geführt ist.

10. Ansauganlage nach einem der vorhergehenden Ansprüche, **dadurch gekennzeichnet, dass** an der Einströmseite (4a; 11 a) der Saugleitung (4; 11) ein Gasmischer einer Gaszuführeinrichtung vorgesehen ist.

## Claims

1. An intake system for internal combustion engines having multiple cylinders, in particular for naturally aspirated gas engines, having an intake line arranged between at least one engine-side intake manifold and a fuel supply device, in particular a gas mixer, **characterized in that** the intake line (4; 11) is equipped with at least one curved section (4b, 4c, 4d; 11b, 11c, 11d) which, or at least one of which, has a bend (4d; 11d) of more than 180 degrees, in particular of approximately 270 degrees, wherein the cross-sectional shape within the bend (4d; 11d) is oval or elliptical.

2. The intake system according to Claim 1, **characterized in that** a substantially S-shaped curve section (4b, 4c; 11b, 11d) is positioned upstream of the bend (4d; 11d).

3. The intake system according to one of the preceding claims, **characterized in that** the cross-sectional shape within the S-shaped curve section (4b, 4c; 11b, 11d) is likewise oval or elliptical.

4. The intake system according to Claim 3, **characterized in that** the degree of ovality in the intake line (4; 11) is variable or changes and/or is adapted to the respective radius of curvature and/or increases in a flow direction, in particular increases proceeding from the S-shaped curve section (4b, 4c; 11b, 11d) as far as a defined region of the bend (4d; 11d).

5. The intake system according to one of the preceding claims, **characterized in that** the cross-sectional area of the intake line (4; 11) is substantially constant.

6. The intake system according to one of Claims 2 to 5, **characterized in that** the S-shaped curve section has two curves which encompass in each case approximately 30 to 60 degrees, in particular 45 degrees.

7. The intake system according to one of the preceding claims, **characterized in that** the intake line (4) is arranged within the upwardly open V space (6) of an internal combustion engine with V-shaped cylinder rows, wherein the intake line (4) extends from the inflow side (4a) substantially over the length of the internal combustion engine and is, by way of the bend (4d), returned to the middle of the internal combustion engine and, there, opens into the two lateral intake manifolds (7, 8).

8. The intake system according to Claim 7, **characterized in that** the S-shaped curve section (4b, 4c) of the intake line (4) runs into the lateral intake manifolds (7, 8) below the branching point (4e), which is of V-shaped form in cross section, of the bend (4d).

9. The intake system according to one of the preceding claims, **characterized in that**, in the case of an inline internal combustion engine (10), the intake line (11) is led from the inflow side
(11a) substantially over the entire length of the internal combustion engine (10) and is, by way of the bend (11d), led to an intake manifold (12) which has a port on the opposite face side of the internal combustion engine (10).

10. The intake system according to one of the preceding claims, **characterized in that** a gas mixer of a gas supply device is provided on the inflow side (4a; 11a) of the intake line (4; 11).

## Revendications

1. Installation d'aspiration pour moteurs à combustion interne comprenant plusieurs cylindres, en particulier pour des moteurs à gaz à aspiration, comprenant une conduite d'aspiration disposée entre au moins un collecteur d'admission du côté de la machine et un dispositif d'alimentation en carburant, en particulier un mélangeur de gaz, **caractérisée en ce que** la conduite d'aspiration (4 ; 11) est pourvue d'au moins une portion courbe (4b, 4c, 4d ; 11b, 11c, 11d) qui, ou parmi lesquelles au moins l'une, présente un coudage (4d ; 11d) de plus de 180°, en particulier d'environ 270°, la forme en section transversale à l'intérieur du coudage (4d ; 11d) étant réalisée sous forme ovale ou elliptique.

2. Installation d'aspiration selon la revendication 1, **caractérisée en ce qu'**une portion de courbure essentiellement en forme de S (4b, 4c ; 11b, 11d) est montée en amont du codage (4d ; 11d).

3. Installation d'aspiration selon l'une quelconque des revendications précédentes, **caractérisée en ce que** la forme en section transversale à l'intérieur de la portion de courbure essentiellement en forme de S (4b, 4c ; 11b, 11d) est réalisée également sous forme ovale ou elliptique.

4. Installation d'aspiration selon la revendication 3, **caractérisée en ce que** le degré d'ovalisation dans la conduite d'aspiration (4 ; 11) est différent ou varie et/ou est adapté au rayon de courbure respectif et/ou augmente dans la direction d'écoulement, en particulier augmente à partir de la portion de courbure en forme de S (4b, 4c ; 11b, 11d) jusque dans une région définie du coudage (4d ; 11d).

5. Installation d'aspiration selon l'une quelconque des revendications précédentes, **caractérisée en ce que** la surface en section transversale de la conduite d'aspiration (4 ; 11) est réalisée de manière essentiellement identique.

6. Installation d'aspiration selon l'une quelconque des revendications 2 à 5, **caractérisée en ce que** la portion de courbure en forme de S présente deux courbures couvrant à chaque fois environ 30 à 60°, en particulier 45°.

7. Installation d'aspiration selon l'une quelconque des revendications précédentes, **caractérisée en ce que** la conduite d'aspiration (4) est disposée à l'intérieur de l'espace en V (6) ouvert vers le haut d'un moteur à combustion interne avec des rangées de cylindre en V, la conduite d'aspiration (4) s'étendant depuis le côté d'afflux (4a) essentiellement sur toute la longueur du moteur à combustion interne et étant ramenée par le biais du coudage (4d) jusqu'au centre du moteur à combustion interne et débouchant à cet endroit dans les deux collecteurs d'admission latéraux (7, 8).

8. Installation d'aspiration selon la revendication 7, **caractérisée en ce que** la portion de courbure en forme de S (4b, 4c) de la conduite d'aspiration (4) s'étend en dessous de la branche (4e) du coudage (4d) réalisée en forme de V en section transversale dans les collecteurs d'admission latéraux (7, 8).

9. Installation d'aspiration selon l'une quelconque des revendications précédentes, **caractérisée en ce que** dans le cas d'un moteur à combustion interne en ligne (10), la conduite d'aspiration (11) est guidée depuis le côté d'afflux (11a) essentiellement sur toute la longueur du moteur à combustion interne (10) et par le biais du coudage (11d) jusqu'à un collecteur d'admission (12) présentant un raccord au niveau du côté frontal opposé du moteur à combustion interne (10).

10. Installation d'aspiration selon l'une quelconque des revendications précédentes, **caractérisée en ce qu'**un mélangeur de gaz d'un dispositif d'alimentation en gaz est prévu au niveau du côté d'afflux (4a ; 11a) de la conduite d'aspiration (4 ; 11).
